# EUROPEAN PATENT APPLICATION

(11) **EP 1 215 844 A2**
(43) Date of publication of application: **19.06.2002**
(21) Application number: 01129999.7
(22) Date of filing: 17.12.2001
(51) Int. Cl.: H04L 9/08

(54) **Key management device/method/program, recording medium, reproducing device/method, recording device, and computer-readable, second recording medium storing the key management program for copyright protection**

(30) Priority: 18.12.2000 JP 2000384389
(71) Applicant: MATSUSHITA ELECTRIC INDUSTRIAL CO., LTD., Kadoma-shi, Osaka 571-8501 (JP)
(72) Inventor: Nakano, Toshihisa, Osaka-fu 572-0077 (JP); Matsuzaki, Natsume, Osaka-fu 562-0023 (JP); Tatebayashi, Makoto, Hyogo-ken 665-0852 (JP)
(74) Representative: Grünecker, Kinkeldey, Stockmair & Schwanhäusser Anwaltssozietät

(57) **Abstract**

The key management device manages keys respectively arranged on nodes forming an N-layer tree structure. Each group of keys composed of a key on the *N*^{th} layer and all its superordinate keys is assigned to a different reproducing device. Upon receipt of information designating a key group, the key selecting unit invalidates each key in the key group, and selects non-invalid keys immediately subordinate to each invalid key. The content encrypting unit encrypts a content using a content key. The ciphertext generating unit generates ciphertexts by encrypting the content key using each selected key. The selected key list generating unit generates a list of the selected keys used to encrypt the content key. The key management device records the encrypted data and the ciphertexts in a recording medium. The reproducing devices reads the recording medium, obtains the content key by decrypting s ciphertext using a key identified in the list.

## Description

### BACKGROUND OF THE INVENTION

### (1) Field of the Invention

The present invention relates to a key management device for managing groups of keys pre-stored in a plurality of reproducing devices for protecting copyrights on created contents, such as movies. The present invention also relates to a recording medium of which data is recorded by the key management device and a reproducing device for reproducing the data read from the recording medium or outputted from the key management device for copyright protection.

### (2) Description of the Related Art

In recent years, as recording mediums increase in storage capacity, sales of recording mediums, such as DVDs, that stores created contents, such as movies, in digital form have been a thriving business. In such a business, it is required that reproducing devices reproduce or copy copyrighted contents only under authorization from copyright holders to protect such contents.

To protect created contents from unauthorized duplication, there is a technique, for example, in which digital contents are stored after encrypted with encryption keys, so that only reproducing devices having corresponding decryption keys are able to decrypt the encrypted contents.

In this case, the decryption keys that reproducing devices have need to be strictly protected in order not to expose the keys to the third parties. However, they may be a case where an unauthorized user finds out a decryption key accidentally or intentionally. Once an unauthorized user takes possession of a decryption key stored in a reproducing device, he may maliciously use the decryption key to decrypt and handle contents, thereby violating copyrights on the contents. For the sake of copyright protection, it is necessary to invalidate decryption keys stored in the reproducing device that have been used without proper authorization.

A similar problem lies in keys stored in reproducing devices for the broadcasting media, such as satellite broadcasting and multicasting via the Internet. In the case of satellite broadcasting, when a reproducing device receives an encrypted broadcasting program, the program is decrypted with a decryption key stored in the reproducing device and reproduced. Here, a decryption key stored in a reproducing device need to be invalidated when a subscription contract allowing the reproducing device to subscribe pay channels is canceled. One example of a technique for invalidating an individual key stored in reproducing devices is a cryptographic key distribution system disclosed in Japanese Laid-Open Application No. HEI 11(1999)-187013.

In this cryptographic key distribution system, however, is disadvantageous in the following respect. When each reproducing device has *N* keys, that is a group of keys arranged on one path in a hierarchal tree structure having *N* layers, it is necessary to generate 2*N*-3 of ciphertexts in order to invalidate the group of keys stored in one reproducing device. In addition, reproducing devices other than that particular reproducing device are required to sequentially decrypt *N*-1 ciphertexts at maximum in order to obtain the content key used to decrypt the contents.

### SUMMARY OF THE INVENTION

In view of the above problems, a first object of the present invention is to provide a key management device or a reproducing device which requires a key management device to generate a fewer number of ciphertexts to invalidate keys stored in a reproducing device and requires a reproducing device to decrypt a minimum number of ciphertexts to obtain a content key.

Further, a second object of the present invention is to provide a key management device for restoring keys that have been once invalidated back to a usable state.

The first object of the present invention is achieved by a key management device for managing keys, the keys being grouped into a plurality of key groups each of which is assigned to one of a plurality of reproducing devices for decrypting encrypted data to reproduce the data, the key management device including a key storage unit for storing the keys, wherein each key is associated with a node forming at least one N-layer tree structure (*N* is 2 or a natural number greater than 2), and each key group includes keys associated with a different group of nodes, each group of nodes being a set of nodes located on a different path, in each tree structure, connecting a different node on the *N*^{th} layer and a node on the highest layer; and an encryption information generating unit for, upon receipt of information designating a key group assigned to one of the reproducing devices, (1) invalidating each key in the designated key group, (2) selecting non-invalid keys being immediately subordinate to each invalid key from among keys in the key groups that are assigned to the other reproducing devices and each of which includes one or more invalid keys, and (3) generating encryption information that includes (i) ciphertexts corresponding to a content key that is used to encrypt the data, the ciphertexts being generated by encrypting the content key using each selected key, and (ii) identification information for identifying the selected keys, and wherein each reproducing device stores *N* keys assigned thereto, selectively decrypts one of the ciphertexts that is decryptable using a key identified by the identification information to obtain the content key, and decrypts the data using the thus obtained content key to reproduce a content.

With this construction, when a group of keys stored in one reproducing device has been invalidated, other reproducing devices than that particular reproducing device are still able to decrypt one of the ciphertexts using a key stored therein, and thus to obtain a content key.

Here, the encryption information generating unit may include: a data generating unit which generates the data by encrypting the content using the content key; an invalid key accepting unit which accepts the information designating the key group assigned to the one reproducing device; a key selecting unit which invalidates each key in the designated key group, and selects the non-invalid keys being immediately subordinate on a different path to each invalid key except for the invalid key residing on the *N*^{th} layer; a ciphertext generating unit which generates the ciphertexts by encrypting the content key using each selected key; and a selected key list generating unit which generates a list used to identify the selected keys.

With this construction, when a group of keys stored in one reproducing device has been designated to be invalidated, the key management device encrypts a content key in a manner to generate ciphertexts that are decryptable to the other reproducing devices than that specific reproducing device. Since data is encrypted with the content key, the other reproducing devices than that specific reproducing device are able to decrypt one of the ciphertexts to obtain the content key, and thus to decrypt the data with the content key. On the contrary, the reproducing device having a group of keys invalidated is not able to obtain the content key.

Here, the key storage unit may include a key management information storage unit which stores each key's (i) identifier for identifying the key, (ii) parent key identifier for identifying its parent key being immediately superordinate to the key, (iii) key state information showing whether the key is a selected key being used to generate one of the ciphertexts, an invalid key, or a non-used key, and (iv) key data, and wherein the invalid key accepting unit accepts identifiers for each key in the designated key group, and the key selecting unit (1) updates the key state information so as to invalidate a key of which identifier matches any of the designated identifiers, and (2) updates the key state information so as to select a key (i) of which identifier does not match any of the designated identifiers, (ii) of which parent key is invalidated, and (iii) that is neither invalided nor selected.

With this construction, each key's key state information included in the key management information is updated in a manner to invalidate a group of keys to be invalidated with reliability.

Here, in the key management information, the key on the highest layer may have a specific value as its parent key identifier, and the key selecting unit may select the key of which parent identifier has the specific value as a selected key unless the key is invalidated.

With this construction, in an initial state, the key management device encrypts a content key into ciphertext with the key residing on the top layer of a tree structure.

The second object of the present invention is achieved by the above key management device, wherein the encryption information generating unit may further include: a restoring key accepting unit which accepts information designating a key group that has been invalidated and to be restored; and a restoring unit which (a) selects, from among the keys in the designated key group to be restored, a key of which parent key being immediately superordinate to the key and a brother key having the same parent key are both invalidated, and (b) changes a subordinate key of the thus selected key in the designated key group to a non-used key.

With this construction, a group of keys that has been once invalidated is restored back to a useable state.

Here, the key storage unit may include a key management information storage unit which stores, each key's (i) identifier for identifying the key, (ii) parent key identifier for identifying its parent key being immediately superordinate to the key, (iii) key state information showing whether the key is a selected key being used to generate one of the ciphertexts, an invalid key, or a non-used key, and (iv) key data, wherein the restoring key accepting unit accepts identifiers for each key in the designated key group to be restored, and the restoring unit updates the key state information so as to (1) select, from among keys having an identifier that matches any of the designated identifiers, (i) the key on the highest layer when its immediately subordinate key residing on a different path is currently selected, or (ii) a key on the second layer or below when its brother key having the same parent key is all invalidated, (2) change to a non-used key a key having an identifier that matches any of the designated identifiers and being subordinate on the same path to the thus selected key, and (3) change to a non-used key a key having an identifier that does not match any of the designated identifiers and having the thus selected key as its parent key.

With this construction, the key management device receives identifiers for a group of keys designated to be restored so as to update the key management information accordingly.

Here, the key management device may further include: a new key accepting unit for accepting the number of reproducing devices to which a key group is newly assigned; a new key generating unit for generating keys which are associated with nodes forming an *M*-layer tree structure (*M* is a natural number between 2 and *N* inclusive); and a connecting unit for replacing a key on the highest layer of the newly generated tree structure with a selected key or a non-used key residing on the (*N-M*+1)^{th} or higher layer of the existing tree structure stored in the key recording unit.

With this construction, a group of new keys may be assigned to a new reproducing device.

Here, the key management device may further include a recording unit for recording to a recording medium the data generated by the data generating unit, the ciphertexts generated by the ciphertext generating unit, and the selected key list generated by the selected key generating unit.

With this construction, there is provided a key management device that encrypts and writes contents onto a recording medium in a manner that the recoded contents are not decryptable to a reproducing device which has been used without proper authorization.

Here, the key management device may further include a transmitting unit for transmitting to the plurality of reproducing devices the data generated by the data generating unit, the ciphertexts generated by the ciphertext generating unit, and the selected key list generated by the selected key generating unit.

With this construction, there is provided a key management device that encrypts and transmits contents in a manner that the transmitted contents are not decryptable to a reproducing device which has been used without proper authorization.

Here, the key management information storing unit may store the key management information every time it is updated by the key selecting unit, and the key storage unit may further include a restoring unit for restoring the key management information back to its initial version or any updated version.

With this construction, the key management information is easily restored back to the state at a point in the past.

Here, the key storage unit may store L tree structures, *L* being 2^{*K*}⁺¹ when the maximum number of key groups to be invalidated is set at 2^{*K*}.

With this construction, the optimal number of tree structures is obtained in view of the number of keys to be assigned to each reproducing device, the number of keys to be stored by the key management device, and the numbers of ciphertexts to be generated.

Alternatively, the first object is achieved by a recording medium to be reproduced by one of a plurality of reproducing devices each of which stores a key group, wherein each key in the key group being assigned to a node forming an *N*-layer tree structure (*N* is 2 or a natural number greater than 2) together with nodes with which keys stored in the other reproducing devices are associated, and the keys in the key group being associated with a group of nodes that is a set of nodes located on a path, in each tree structure, connecting a node on the *N*^{th} layer and a node on the highest layer, the recording medium including: a data area which stores data generated by encrypting a content using a content key; a ciphertext area which stores at least one ciphertext generated by encrypting the content key using a selected key, the selected key being identical to one of the keys stored in each reproducing device except for a specifically designated reproducing device; and a selected key list area which stores information identifying the selected key used for encrypting the content key.

With this construction, data recoded in the recording medium is reproducible only by the reproducing devices other than a reproducing device that has been misused.

Alternatively, the first object of the present invention is achieved by a reproducing device for decrypting encrypted data to reproduce the data, the reproducing device including: a key group storing unit for storing *N* keys (*N* is 2 or a natural number greater than 2), wherein the *N* keys are respectively associated with nodes forming an *N*-layer tree structure together with nodes with which keys stored in other reproducing devices are associated, and the *N* keys are associated with a group of nodes that is a set of nodes located on a path, in the tree structure, connecting a node on the *N*^{th} layer to a node on the highest layer; a reproduction information obtaining unit for obtaining (i) the data by encrypting a content using a content key, (ii) at least one ciphertext generated by encrypting the content key, and (iii) identification information for identifying a key used to encrypt the content key; a content key decrypting unit for selecting a key identified by the identification information from the keys stored in the key group storage unit, and decrypting the ciphertext that is decryptable using the thus selected key to obtain the content key; and a content reproducing unit for decrypting the data using the thus obtained content key to reproduce the content.

With this construction, there is provided a reproducing device capable of reproducing obtained data using one of the keys stored therein.

Here, the reproducing device may further include a read unit for reading from a recording medium (i) the data generated by encrypting the content using the content key, (ii) the ciphertext generated by encrypting the content key, and (iii) the information for identifying the key used to decrypt the content key, and passing the read result to the reproduction information obtaining unit.

With this construction, data recoded in the recording medium is decrypted and reproduced only by authorized reproducing devices.

Here, the reproducing device may further include a receiving unit for receiving (i) the data generated by encrypting the content using the content key, (ii) the ciphertext generated by encrypting the content key, and (iii) the information for identifying the key used to decrypt the content key, and passing the received result to the reproduction information obtaining unit.

With this construction, broadcasted data is received, decrypted and reproduced only by authorized reproducing devices.

Alternatively, the fist object of the present invention may be achieved by a key management method for use in a key management device to manage keys stored in a storage area of the key management device, wherein the keys are grouped into a plurality of key groups each of which is assigned to one of a plurality of reproducing devices, each key is associated with a node forming at least one *N*-layer tree structure (*N* is 2 or a natural number greater than 2), each key group includes keys associated with a different group of nodes, each group of nodes being a set of nodes located on a different path, in each tree structure, connecting a different node on the *N*^{th} layer and a node on the highest layer, the key management method including: an accepting step for accepting information designating a key group stored in one of the reproducing devices; a key selecting step for (1) invalidating each key in the designated key group, and (2) selecting non-invalid keys being immediately subordinate to each invalid key from among keys in the key groups that are assigned to the other reproducing devices and each of which includes one or more invalid keys; and an encryption information generating step for generating encryption information that includes (i) ciphertexts corresponding to a content key that is used to encrypt the data, the ciphertexts being generated by encrypting the content key using each selected key, and (ii) identification information for identifying the selected keys, and wherein each reproducing device stores *N* keys assigned thereto, selectively decrypts one of the ciphertexts that is decryptable using a key identified by the identification information to obtain the content key, and decrypts the data using the thus obtained content key to reproduce a content.

With this method, when a group of keys stored in one reproducing device is invalidated, the other reproducing devices than that particular reproducing device are still able to decrypt one of the ciphertexts with a key stored within the reproducing devices.

Alternatively, the first object of the present invention is achieved by a key management program for use in a computer to manage keys, the keys being grouped into a plurality of key groups each of which is assigned to one of a plurality of reproducing devices, wherein each key is associated with a node forming at least one *N*-layer tree structure (*N* is 2 or a natural number greater than 2), each key group includes keys associated with a different group of nodes, each group of nodes being a set of nodes located on a different path, in each tree structure, connecting a different node on the *N*^{th} layer and a node on the highest layer, the program including: an accepting step for accepting information designating a key group stored in one of the reproducing devices; a key selecting step for (1) invalidating each key in the designated key group, and (2) selecting non-invalid keys being immediately subordinate to each invalid key from among keys in the key groups that are assigned to the other reproducing devices and each of which includes one or more invalid keys; and an encryption information generating step for generating encryption information that includes (i) ciphertexts corresponding to a content key that is used to encrypt the data, the ciphertexts being generated by encrypting the content key using each selected key, and (ii) identification information for identifying the selected keys, and wherein each reproducing device stores *N* keys assigned thereto, selectively decrypts one of the ciphertexts that is decryptable using a key identified by the identification information to obtain the content key, and decrypts the data using the thus obtained content key to reproduce a content.

With this program, keys assigned to reproducing devices are managed.

Alternatively, the object of the present invention is achieved by a computer readable recording medium for use in a key management device to manage keys, the keys being grouped into a plurality of key groups each of which is assigned to one of a plurality of reproducing devices, wherein each key is associated with a node forming at least one *N*-layer tree structure (*N* is 2 or a natural number greater than 2), each key group includes keys associated with a different group of nodes, each group of nodes being a set of nodes located on a different path, in each tree structure, connecting a different node on the *N*^{th} layer and a node on the highest layer, the recording medium including: an accepting step for accepting information designating a key group stored in one of the reproducing devices; a key selecting step for (1) invalidating each key in the designated key group, and (2) selecting non-invalid keys being immediately subordinate to each invalid key from among keys in the key groups that are assigned to the other reproducing devices and each of which includes one or more invalid keys; and an encryption information generating step for generating encryption information that includes (i) ciphertexts corresponding to a content key that is used to encrypt the data, the ciphertexts being generated by encrypting the content key using each selected key, and (ii) identification information for identifying the selected keys, and wherein each reproducing device stores *N* keys assigned thereto, selectively decrypts one of the ciphertexts that is decryptable using a key identified by the identification information to obtain the content key, and decrypts the data using the thus obtained content key to reproduce a content.

Such a recoding medium is applicable for use in a key management device.

Alternatively, the first object of the present invention is achieved by a system including: a plurality of recording devices for recording encrypted data to a rewritable recording medium; a plurality of reproducing devices for decrypting and reproducing the encrypted data being recoded in the recording medium; and a key management device for managing keys, the keys being grouped into a plurality of key groups each of which is assigned to the plurality of recording devices and the plurality of reproducing devices, wherein the key management device includes: a key storage unit for storing the keys, wherein each key is associated with a node forming at least one *N*-layer tree structure (*N* is 2 or a natural number greater than 2), and each key group includes keys associated with a different group of nodes, each group of nodes being a set of nodes located on a different path, in each tree structure, connecting a different node on the *N*^{th} layer and a node on the highest layer; an encryption information generating unit for, upon receipt of information designating a key group assigned to one of the recording devices and/or one of the reproducing devices, (1) invalidating each key in the designated key group, (2) selecting non-invalid keys being immediately subordinate to each invalid key from among keys in the key groups that are assigned to the other recording devices and/or the other reproducing devices and each of which includes one or more invalid keys, and (3) generating encryption information that includes (i) at least one ciphertext corresponding to a content key that is used to encrypt the data, the ciphertexts being generated by encrypting the content key using each selected key, and (ii) identification information for identifying the selected keys; and an encryption information recording unit for recording the thus generated encryption information to the recording medium, each recording device includes: a key group storing unit for storing *N* keys, the *N* keys being associated with nodes located on a path, in each tree structure, connecting a node on the *N*^{th} layer to a node on the highest layer; a content key decrypting unit for reading the encryption information from the recording medium, identifying a key stored in the key group storing unit using the identification information, and decrypting the ciphertext being decryptable with the thus identified key to obtain the content key; and a content encrypting unit for encrypting a content using the thus obtained content key, and record the resulting encrypted data to the recording medium, and each reproducing device includes: a key group storing unit for storing *N* keys, the *N* keys being associated with nodes located on a path, in the tree structure, connecting a node on the *N*^{th} layer to a node on the highest layer; a reproduction information obtaining unit for obtaining the data generated by encrypting the content using the content key, the ciphertext generated by encrypting the content key, and the identification information for identifying the key used to encrypt the content key; a content key decrypting unit for selecting a key identified by the identification information from the keys stored in the key group storage unit, and decrypting the ciphertext decryptable using the thus selected key to obtain the content key; and a content reproducing unit for decrypting the data using the thus obtained content key to reproduce the content.

With this construction, only authorized recoding devices are able to encrypt and record obtained contents using a content key, and only authorized reproducing devices are able to decrypt the contents recorded as ciphertexts using the content key and reproduce the resulting contents.

Alternatively, the first object of the present invention is achieved by a rewritable recording medium having data generated by encrypting a content using a content key, the data being recorded by a recording device storing one of key groups, and read/reproduced by a reproducing device storing one of the key groups, wherein the key groups together include keys each of which is associated with a node forming an *N*-layer tree structure (*N* is 2 or a natural number greater than 2), each key group includes keys associated with a different group of nodes, each group of nodes that is a set of nodes located on a different path, in the tree structure, connecting a different node on the *N*^{th} layer and a node on the highest layer, the recording medium including: a ciphertext area for storing at least one ciphertext generated by encrypting the content key using a selected key, the selected key being identical to a key stored in the recoding device and a key stored in the reproducing device; a selected key area for storing identification information identifying the selected key used for encrypting the content key; and a data area for storing data recorded by the recording device, the data being decryptable using the content key, the content key is obtained by decrypting the ciphertext using the key that is stored in the reproducing device and selected according to the identification information

Contents are recoded to such a recording medium only by authorized recording devices and the contents in such a recording medium are reproducible only by authorized reproducing devices.

Alternatively, the first object of the present invention is achieved by a key management device for managing keys, the keys being grouped into a plurality of key groups each of which is assigned to one of a plurality of recording devices for recording encrypted data in a rewritable recording medium, and to one of a plurality of reproducing devices for decrypting the encrypted data recorded in the recording medium to reproduce the data, the key management device including: a key storing unit key storage unit for storing the keys, wherein each key is associated with a node forming at least one *N*-layer tree structure (*N* is 2 or a natural number greater than 2), and each key group includes keys associated with a different group of nodes, each group of nodes being a set of nodes located on a different path, in each tree structure, connecting a different node on the *N*^{th} layer and a node on the highest layer; an encryption information generating unit for, upon receipt of information designating a key group assigned to one of the reproducing devices, (1) invalidating each key in the designated key group, (2) selecting non-invalid keys being immediately subordinate to each invalid key from among keys in the key groups that are assigned to the other reproducing devices and each of which includes one or more invalid keys, and (3) generating encryption information that includes (i) ciphertexts corresponding to a content key that is used to encrypt the data, the ciphertexts being generated by encrypting the content key using each selected key, and (ii) identification information for identifying the selected keys; and an encryption information recording unit for recording the thus generated encryption information in the recording medium.

With this construction, groups of keys assigned to recording devices and reproducing devices are managed.

Alternatively, the first object of the present invention is achieved by a recording device for recording encrypted data in a rewritable recording medium, the recording device including: a key group storing unit for storing *N* keys (*N* is 2 or a natural number greater than 2), wherein the *N* keys are respectively associated with nodes forming an *N*-layer tree structure together with nodes with which keys stored in other recording devices are associated, and the *N* keys are associated with a group of nodes that is a set of nodes located on a path, in the tree structure, connecting a node on the *N*^{th} layer to a node on the highest layer; a content key decrypting unit for reading the encryption information from the recording medium, selecting a key stored in the key group storing unit using identification information, and decrypting a ciphertext being decryptable with the thus selected key to obtain the content key, wherein the recording medium pre-stores encryption information including at least the ciphertext encrypted using the selected key and the identification information for identifying the selected key; and a content encrypting unit for encrypting a content using the thus obtained content key, and record the resulting encrypted data to the recording medium.

With this construction, only authorized recording devices are able to encrypt a content using a content key and record the encrypted content to a recording medium.

### BRIEF DESCRIPTION OF THE DRAWINGS

These and the other objects, advantages and features of the invention will become apparent from the following description thereof taken in conjunction with the accompanying drawings which illustrate a specific embodiment of the invention.

In the drawings:
FIG. 1 is a schematic view showing the constructions of a key management device and a reproducing device according to an embodiment 1 of the present invention;
FIG. 2 is a schematic view showing, in a tree structure model, one example of key management information stored in a key management information storing unit according to the embodiment 1;
FIG. 3 is a view showing one example of the key management information stored in the key management information storage unit according to the embodiment 1;
FIG. 4 is a view showing one example of the key management information that is updated and stored in the key management information storage unit according to the embodiment 1;
FIG. 5 is a view showing one example of memory contemns recorded to a recording medium by a recording unit according to the embodiment 1;
FIG. 6 is a view showing one example of the memory contents recorded to a recording medium following the key management information shown in FIG. 4;
FIG. 7 is a view showing one example of key information stored in a key storage unit included in the reproducing device according to the embodiment 1;
FIG. 8 is a flowchart showing operations for updating the key management information according to the embodiment 1;
FIG. 9 is a view showing, in a tree structure model, one example of key management information stored in a key management information storing unit included in a key management device according to the embodiment 1 of the present invention;
FIG. 10 is a view showing one example of the key management information stored in the key management information storage unit according to the embodiment 2;
FIG. 11 shows one example of table showing comparisons. of the data included in the key management information according to a different number of tree structures;
FIG. 12 is a schematic view showing the constructions of a key management device and a reproducing device according to an embodiment 3 of the present invention;
FIG. 13 is a flowchart showing operations conducted by the key management device of the embodiment 3 for restoring keys that have been invalidated back to a usable state;
FIG. 14 is a schematic view schematically showing the process for assigning groups of keys to new reproducing devices;
FIG. 15 is a schematic view showing the configuration of a key management system according to an embodiment 4 of the present invention;
FIG. 16 is a schematic view showing the construction of a recording device according to the embodiment 4; and
FIG. 17 is a schematic view showing the construction of a reproducing device according to the embodiment 4.

### DESCRIPTION OF THE PREFERRED EMBODIMENT

Hereinafter, description is given to preferred embodiments of a key management device and a reproducing device according to the present invention with reference to the drawings.

### (Embodiment 1)

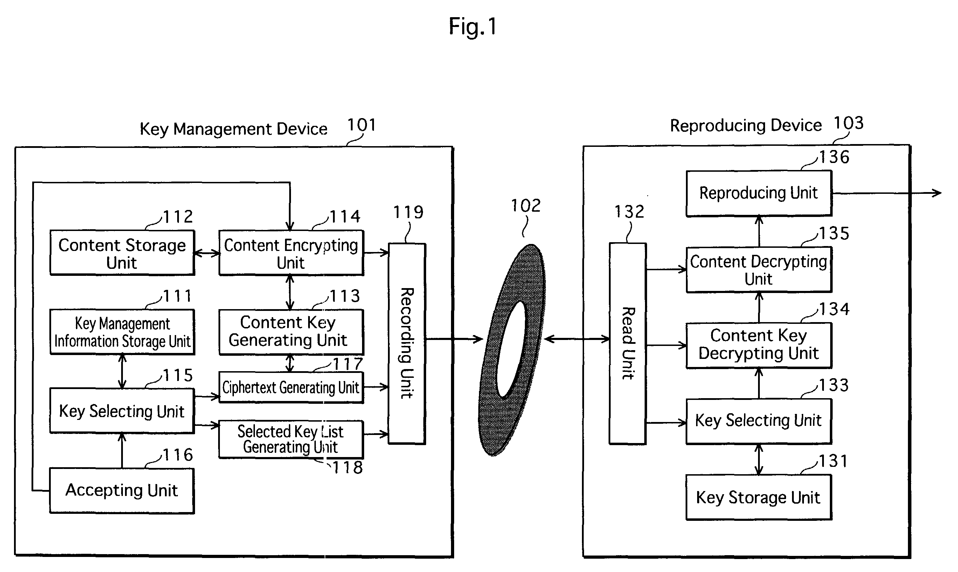

FIG. 1 is a view showing the constructions of a key management device and a reproducing device according to an embodiment 1 of the present invention.

The key management device 101 includes a key management information storage unit 111, a content storage unit 112, a content key generating unit 113, a content encrypting unit 114, a key selecting unit 115, an accepting unit 116, a ciphertext generating unit 117, a selected key list generating unit 118, and a recording unit 119.

A recording medium 102 is, for example, a DVD having a large storage capacity.

Each of reproducing devices 103 includes a key storage unit 131, a read unit 132, a key selecting unit 133, a content key decrypting unit 134, a content decrypting unit 135 and a reproducing unit 136.

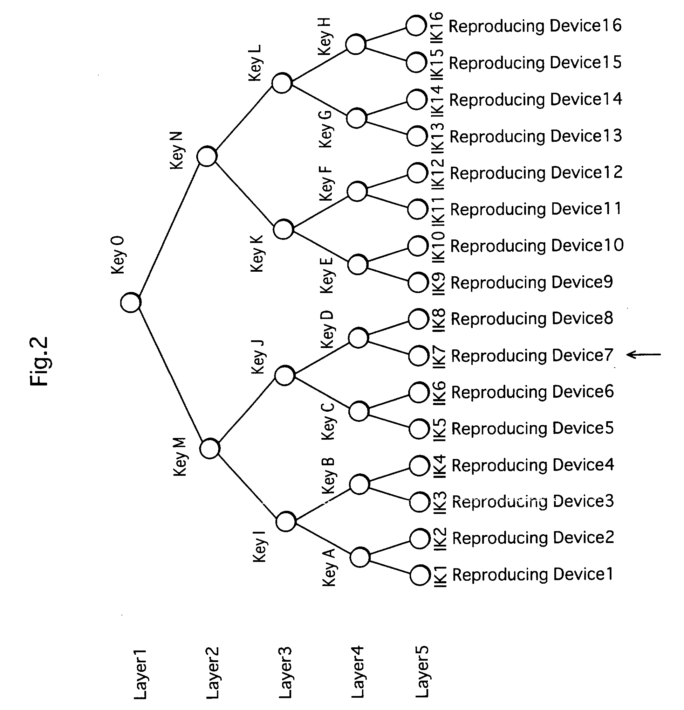

The key management information storage unit 111 stores, as key management information, keys each of which resides on a node of a tree structure as shown in FIG. 2. The tree structure is a binary tree structure with five hierarchical layers from a layer 1, the top layer, to a layer 5, the lowest layer.

Each key residing on the layer 5 is an individual key assigned to one of the reproducing devices 103. To be more specific, keys residing on each path between each individual key on the layer 5 and a Key 0 residing on the layer 1 form groups of keys, and each group of keys is assigned to a corresponding reproducing device 103.

For example, a reproducing device 1, which is one of the reproducing devices 103, has five keys assigned thereto, namely an individual key IK1, a Key A, a Key I, a Key M, and the Key O. Similarly, a reproducing device 7 has five keys assigned thereto, namely an individual key IK7, a Key D, a Key J, a Key M, and the Key O.

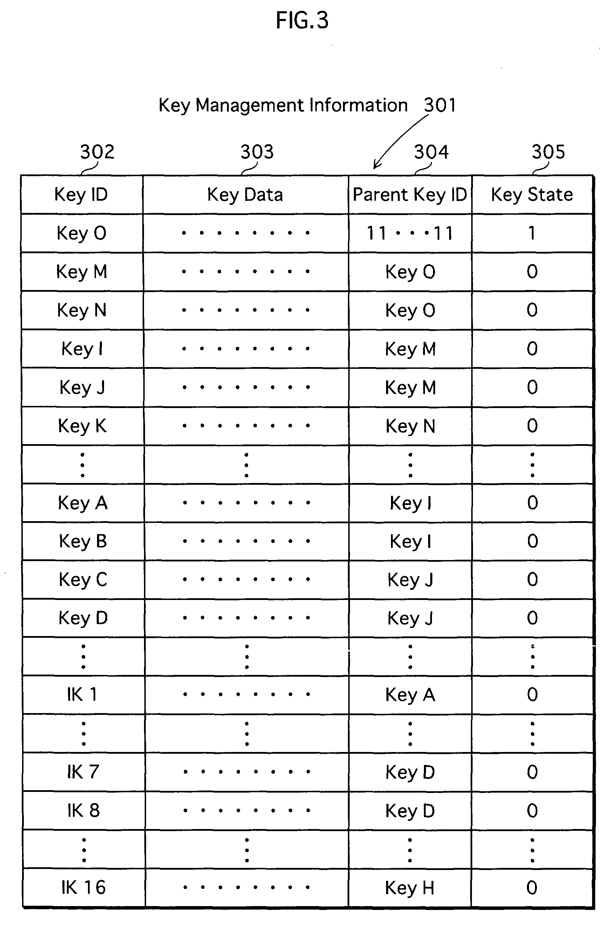

FIG. 3 shows key management information stored in the key management information storage unit 111. Key management information 301 includes each key's key ID 302, key data 303, parent key ID 304, and key state 305.

The key ID 302 is an identifier for identifying each key arranged on each node of the tree structure shown in FIG. 2.

The key data 303 is arbitrarily generated data, which functions as an encryption key when used by the key management device 101, and as a decryption key when used by the reproducing device 103.

The parent key ID 304 is an identifier for a key residing immediately above each key. In the case of the individual key IK1, for example, the parent ID 304 is Key A. The Key O on the layer 1 does not have any parent key, so that its parent key ID 304 is "11···11" that indicates there exists no parent key.

The key sate 305 indicates whether the key is currently in use. When the key is used to encrypt or decrypt a content key, the key is a selected key that is indicated by the key state "1". When the key state 305 is "0", the key is not used for encryption or decryption. The key management information 301 shows an initial state of the key management information, so that no key state 305 is "-1". When the key state 305 is "-1", the key is an invalid key, which will be described later.

The content storage unit 112 is constructed of a hard disk and the like, and stores created contents, such as movies, in digitized form.

The content key generating unit 113 generates, for each content, a content key used to encrypt the content. When the key management information is updated, each content key is updated as well.

The content encrypting unit 114 encrypts contents using a common key cryptography method, such as DEF (Data Encryption Standard. In response to an encryption direction passed from the accepting unit 116, the content encrypting unit 114 encrypts a content read from the content storage unit 112 with a content key generated by the content key generating unit 113, and then passes the resulting content to the recording unit 119.

In response to the encryption direction passed from the accepting unit 116, the key selecting unit 115 detects a key of which key state 305 is "1" from the key information 301 stored in the key management information storage unit 111. Then, the key selecting unit 115 reads the key ID 302 and the key data 303 of the detected key, and passes them to the ciphertext generating unit 117. The key selecting unit 115 also passes the key ID 302 of the detected key to the selected key list generating unit 118.

On the other hand, when key IDs of keys to be invalidated are passed from the accepting unit 116, the key selecting unit 115 updates the key management information 301 currently stored in the key management information storage unit 111 accordingly.

Here, the key IDs IK7, Key D, Key J, Key M and Key O, which are a group of key assigned to the reproducing unit 7 shown in FIG. 2, are notified to be invalidated, the key selecting unit 115 first excludes a key of which key state 305 is "-1" from the keys included in the key management information 301. Here, the key state "-1" indicates that the key is assigned to a reproducing device which has been misused. Such a key is referred to as an "invalid key".

Next, the key selecting unit 115 sequentially judges whether the key ID 302 of each key matches any of the key IDs notified. If there is a match, the key state of the currently processed key is changed to "-1". If not, the key selecting unit 115 then judges whether the parent key of the currently processed key is in the key state being "-1". If the key state of the parent key is not being "-1", the key state 305 of the currently processed key is left unchanged from "0", which indicates the key is not in use. If the key state 305 of the parent key is "-1", the key state of the currently processed key is changed to "1". The key state "1" indicates that the key is used to encrypt a content key. Such a key is referred to as a "selected key". The above processing is repeated for all the keys included in the key management information 301.

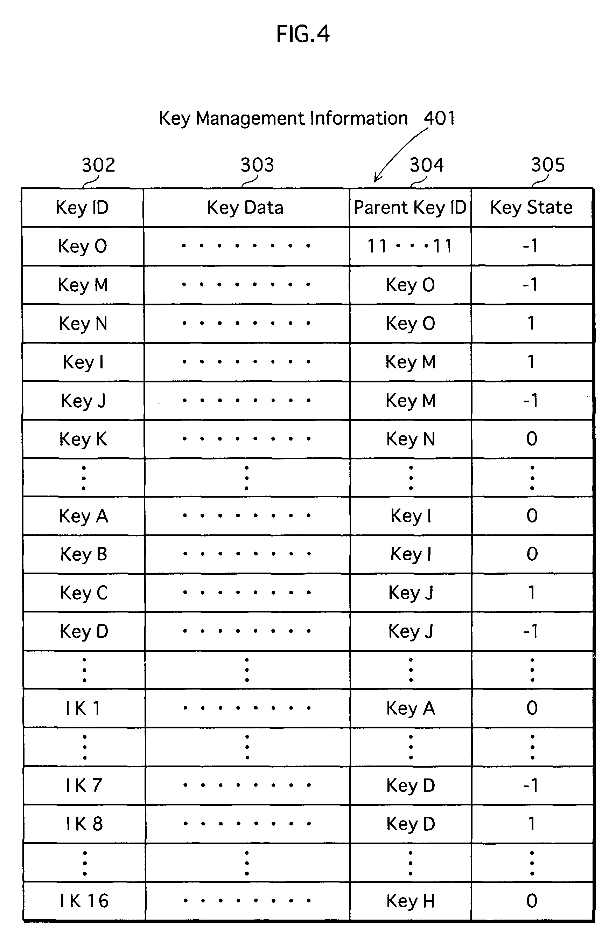

Through conducting the above processing, the key selecting unit 115 updates the key management information 301. The updated key management information denoted by the reference number 401 is shown in FIG. 4.

Next, the key selecting unit 115 passes to the ciphertext generating unit 117 the key IDs 302 and the key data 303 that correspond to keys of which key state 305 being "1". The key selecting unit 115 also passes the same key IDs 301 to the selected key list generating unit 118.

It should be noted that in the above description, all the key IDs of the keys to be invalidated are passed to the key selecting unit 115. Yet, it is also applicable to pass only the key ID of the individual key to be invalidated. In this case, the key selecting unit 115 first detects from the key management information 301 or 401 a key ID 302 that corresponds to the passed Key ID. Then, by sequentially detecting its parent key ID 304, the key selecting unit 115 finds out all the keys to be invalidated.

The accepting unit 116 accepts operator' s input directing content encryption or designating key IDs to be invalidated. Upon receipt of an input directing content encryption, the accepting unit 116 notifies the key selecting unit 115 and the encrypting unit 114 that encryption is directed. Upon receipt of an input designating key IDs to be invalidated, the accepting unit 116 passes the inputted key IDs to the key selecting unit 115.

Upon receipt of the key IDs and the key data from the key selecting unit 115, the ciphertext generating unit 117 generates ciphertexts by encrypting the content key, which is generated by the content key generating unit 113, using the passed key data. The thus generated ciphertexts are then passed to the recording unit 119.

The selected key list generating unit 118 generates a selected key list including the key IDs that are passed from the key selecting unit 115, and then passes the thus generated list to the recording unit 119.

The recording unit 119 records the encrypted contents passed from the content encrypting unit 114, the ciphertexts passed from the ciphertext generating unit 117, the selected key list passed from the selected key list generating unit 118 onto the recording medium 102 within each corresponding storage area.

The recording medium 102 has storage areas separately for a selected key list, ciphertexts, and data, and the selected key list, the ciphertexts and the contents which have been encrypted with the content key, are recorded by the recording unit 119 into their respective storage areas.

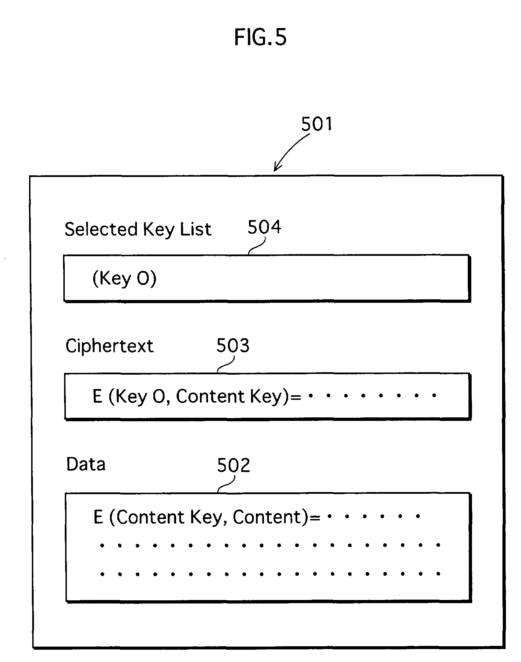

FIG. 5 shows memory contents of the recording medium 102 recorded by the key management device 101 when the key management information storage unit 111 stores the key management information 301 shown in FIG. 3.

The memory contents 501 include data 502, a ciphertext 503, and a selected key list 504. Here, the data 502 is a content encrypted with a content key. The ciphertext 503 is generated by encrypting the content key using a key of which key state 305 is "1" according to the key management information 301. In this case, the key used for encryption is the Key O on the top layer 1 of the key structure. The selected key list 504 is used to specify the key used to encrypt the ciphertext 503. It should be noted that "E(X, Y)" indicates that the data Y is encrypted with the key X. Accordingly, the ciphertext 503 indicates that the content key is decrypted with the key of which key ID is "Key O".

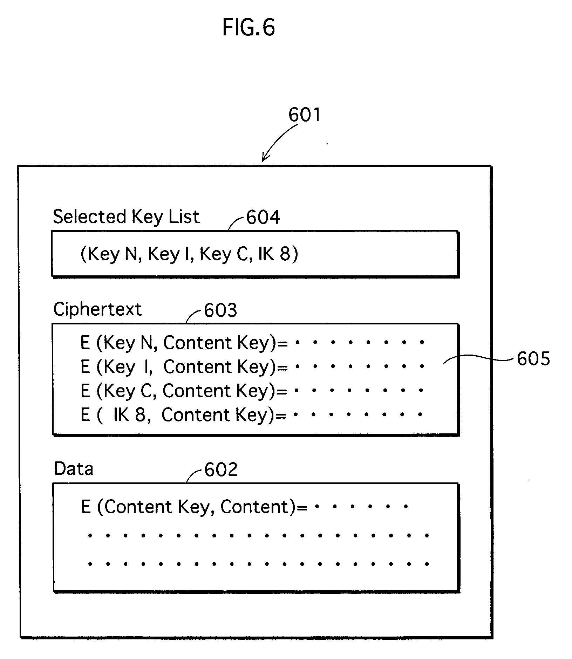

FIG. 6 shows memory contents of the recording medium 102 recorded after the group of keys assigned to the reproducing device 7 (see FIG. 2), namely IK7, Key D, Key J, Key M and Key O, is invalidated. In other words, the memory contents are the ones recorded when the key management information storage unit 111 stores the key management information 401 shown in FIG. 4.

The memory contents 601 include data 602, ciphertexts 603 and a selected key list 604.

The data 602 is the contents each encrypted with a content key. Each content key is generated for each content, and when the key management information 301 is updated, a different content key is generated for the same content. That is to say, the data 502 and 503 included in the memory contents 501 and 601, respectively, are not the same although the original content is the same. This is because their content keys are different.

The ciphertexts 603 are generated by encrypting the content key using each key included in the selected key list 604. The memory contents 501 include only one ciphertext 503 since there is only one key recorded in the selected key list 504, while the memory contents 503 include four ciphertexts 603 since there are four keys recorded in the selected key list 604.

Incidentally, the cryptographic key distribution system cited in the background of the invention above, in order to invalidate one individual key and its parent keys residing on the upper layers, seven ciphertexts need to be generated when the tree structure has five layers similarly to this embodiment. That is to say, the cryptographic key distribution system of the cited invention requires 2*N*-3 ciphertexts, while this embodiment only requires *N*-1 ciphertexts.

Hereinafter, description is given to one of the reproducing devices 103.

Keys each arranged on a node of the tree structure shown in FIG. 2 are assigned to the key storage unit 131 in advance. Thus, the key storage unit 131 stores five pieces of key information each of which is a key ID of each assigned key paired with corresponding key data.

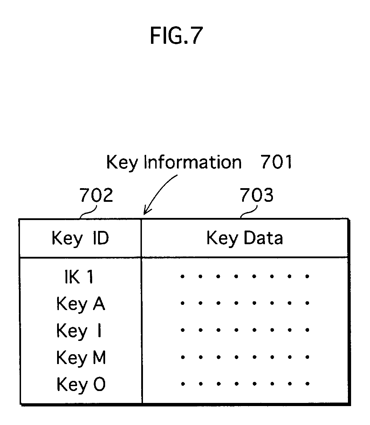

FIG. 7 shows the key information stored in the key storage unit 131 of the reproducing device 1 shown in FIG. 2. The key information 701 includes the key IDs 702 and the pieces of data 703 in correspondence with each other.

When the recording medium is attached to the reproducing unit 103 and when a reproduction direction is passed from an operating unit (not illustrated), the read unit 132 reads the memory contents from the recording medium 102.

The read unit 132 selectively passes, from the read memory contents, the selected key list, the ciphertexts, and the data, which is the encrypted contents, to the key selecting unit 133, the contently key decrypting unit 134 and the content decrypting unit 135, respectively.

Upon the receipt of the selected key list, the key selecting unit 133 selects from the keys stored in the key storage unit 131 a key ID that matches any of key IDs included in the selected key list. The key selecting unit 133 then reads and passes to the content key decrypting unit 134 the key ID selected thereby together with the corresponding key data.

The content key decrypting unit 134 selects from the ciphertexts passed from the read unit 132 the one that corresponds to the key ID passed from the key selecting unit 133, and decrypts the selected ciphertext using the key data passed from the key selecting unit 133 as a decryption key. The content key decrypting unit 134 then passes the thus decrypted content key to the content decrypting unit 135.

The content decrypting unit 135 verifies the correctness of the content key passed from the content key decrypting unit 134 using verification techniques such as "signature". Next, the content decrypting unit 135 decrypts the encrypted content passed from the read unit 132 using the content key passed from the content key decrypting unit 134, then passes the thus decrypted content to the reproducing unit 136.

The reproducing unit 136 reproduces and outputs the content passed from the content decrypting unit 135.

Hereinafter, description is given to one concrete example, in which the reproducing unit 103 is the reproducing unit 1 shown in FIG. 2, and the recording medium 102 stores the memory contents 501. The key storage unit 131 stores the key information 701, and the read unit 132 passes to the key selecting unit 133 the selected key list 504 that includes the key ID, "Key O". The key selecting unit 133 detects from the key information 701 a key ID that matches the passed key ID "Key O", reads the key ID 702 and the key data corresponding to the detected key, and then passes the read ID and data to the content key decrypting unit 134.

The content key decrypting unit 134 decrypts the ciphertext passed from the read unit 132 using the key data passed from the key selecting unit 133 to obtain a content key, and then passes the thus obtained content key to the content decrypting unit 135.

Next, description is given to the case where the recording medium stores the memory contents 601. In this case, the read unit 132 passes to the key selecting unit 133 the selected key list 604 that includes the key IDs, "Key N, Key I, Key C and IK8".

The key selecting unit 133 selects the matched key ID, "Key I" from the keys included in the key information 701 stored in the key storage unit 702. Then, the key selecting unit 133 reads the key ID "Key I" and the corresponding key data and passes them to the content key decrypting unit 134.

The content key decrypting unit 134 selectively decrypts one of the four given ciphertexts 605 that is encrypted with "Key I" using the key data passed from the key selecting unit 133, thereby obtaining the content key.

Now, description is given to the case where the reproducing unit 103 is the reproducing unit 7 shown in FIG. 2, and the recording medium 102 stores the memory contents 601. In this case, the selected key list 604 passed to the key selecting unit 133 includes the key IDs, "Key N, Key I, Key C and IK8", while the key storage unit 131 stores the key IDs "IK7, Key D, Key J, Key M and Key O". Here, there is no match in the key IDs, so that the content key decrypting unit 134 is not allowed to decrypt any of the ciphertexts. In this case, the reproducing unit 7 can not obtain a content key.

In this embodiment, the number of ciphertexts that the content key decrypting unit 134 decrypts in order to obtain a content key is just one except the case of the misused reproducing unit 7. On the contrary, the prior art cryptographic key distribution system cited above needs to decrypt at most four, or *N*-1, ciphertexts to obtain a content key, when the tree structure has five layers just as this embodiment.

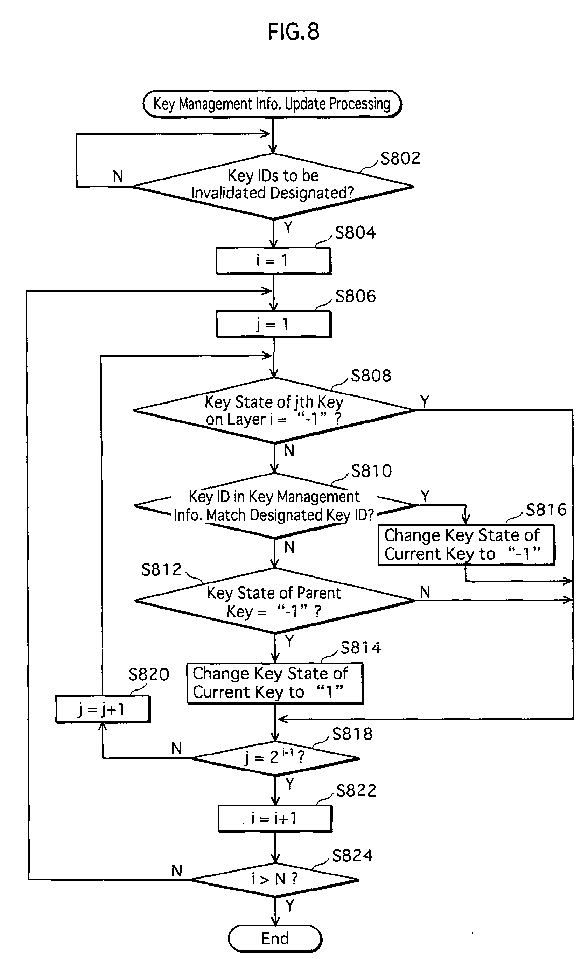

Hereinafter, description is given to main operations of updating processing conducted by the key management device 101 with reference to the flowchart shown in FIG. 8.

First, the key selecting unit 115 waits for the accepting unit 116 to inform key IDs designated to be invalidated, which are the keys assigned to a misused reproducing device (S802). Upon receipt of the key IDs, the key selecting unit 115 initializes the counter i to "1" (step S804), and then initializes the counter j to "1" (step S806).

The key selecting unit 115 judges whether the j^{th} key residing on the i^{th} layer (the layer i) is in the key state "-1" (step S808), and goes on a step S818 if the key state is "-1". If not, the key selecting unit 115 then judges whether the key ID of the j^{th} key on the layer i matches any of the designated key IDs (step S810). When there is no key ID matched, the selecting unit 115 judges whether its parent key (on the layer i-1) is in the key state "-1" (step S812). Here, when there exists no parent key, the above judgment results in negative. If the key state of the parent key is "-1", the selecting unit 115 goes onto the step S818. If the key state of the parent key is "-1", the selecting unit 115 changes the key state of the currently processed key from "0" to "-1" (step S814), then goes onto the step S818. In the step S810, on the other hand, when the key ID matches any of the designated key IDs, the selecting unit 115 changes the key state of the currently processed key to "-1" (step S816), then goes onto the step S818.

Next, in the step S818, the key selecting unit 115 judges whether the counter j is equal to 2^{j-1}. When the judgment results in negative, the key selecting unit 115 adds "1" to the counter i (step S820), and then goes back to the step S808. When the judgment results in affirmative, the key selecting unit 115 adds "1" to the counter i (step S822), and then judges whether i>N, that is whether the value of counter i exceeds the layer *N* (step S824). When the judgment results in affirmative, the processing is terminated, while the judgment results in negative, the processing goes onto the step S806.

In this embodiment, description is given to the case where keys are arranged on nodes forming a binary tree structure having five layers. Yet, the tree structure may be a ternary tree structure, or may branch off into irregular number of nodes.

In order to invalidate keys assigned to another reproducing device, for example the reproducing device 12, after the keys assigned to the reproducing device 7 shown in FIG. 2 are invalidated, the key selecting unit 115 conducts the above operations of updating the key management information shown in FIG. 8, so that the key management information is updated.

As a result, the selected key list generating unit 118 generates a selected key list (that includes the key IDs "Key I, Key L, Key C, Key E, IK8, and IK11).

In addition, the ciphertext generating unit 117 generates the following ciphertexts, which are
E(Key I, Content key),
E(Key L, Content key),
E(Key C, Content key),
E(Key E, Content key),
E(Key IK8, Content key), and
E(Key IK11, Content key).

Here, it is also applicable to constitute the key management device to store the key management information 301, which is an initial state of the key management information, or the key management information 401, which is a state after the group of keys assigned to the reproducing device 7 is invalidated, or the key management information (not illustrated), which is a state after the group of keys assigned to the reproducing device 12 is further invalidated, together with the time and data at which the key management information is updated.

If the history of the key management information 301 and the like is stored in the key management information storage unit 111 in the above manner, the key management information 305 and the like may be easily converted back to the state at a point in the past.

### (Embodiment 2)

Next, description is given to a key management device and a reproducing device according to a second embodiment of the present invention. The key management device and the reproducing device in this embodiment are almost the same as those in the embodiment 1 above. So, the description is given with reference to the FIG. 1.

In this embodiment, keys assigned to each reproducing device are groups of keys arranged on nodes of a plurality of tree structures.

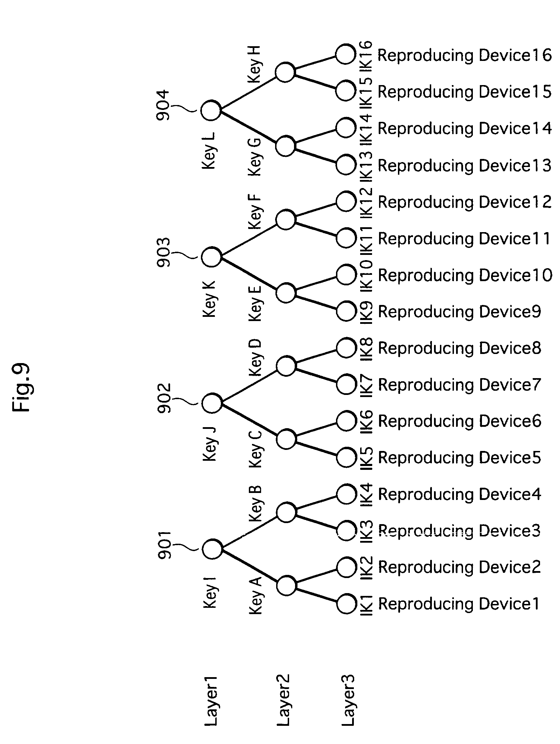

The key management information storage unit 111 stores, as key management information, keys each of which resides on a node forming four tree structures as shown in FIG. 9.

Each of the tree structures 901, 902, 903 and 904 is a binary tree structure having three hierarchal layers. Each key residing on the layer 3 is an individual key assigned to one of the reproducing device. For example, the reproducing device 1 has three keys assigned thereto, namely an individual key IK1, and its upper keys of Key A and Key I. Similarly, the reproducing device 2 has three keys assigned thereto, namely, an individual key IK2 and its upper keys of Key A and Key I.

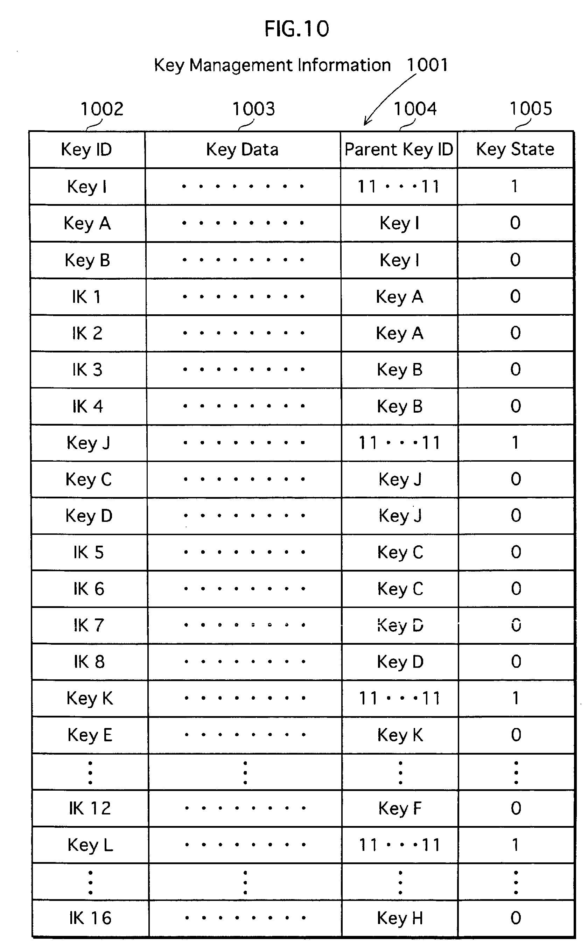

Key management information of these keys is shown in FIG. 10. Similarly to the key management information 301, the key management information 1001 includes each key's key ID 1002, key data 1003, parent key ID 1004, and key state 1005, which is listed in the following order: keys on the layer 1 to the layer 3 of the tree structure 901, then the layer 1 to layer 3 of the tree structure 902, ··· to the layer 3 of the tree structure 904.

The key management information 1001 has four selected keys, that are the keys of which key state is "1". Thus, the ciphertext generating unit 117 generates four ciphertexts.

Similarly to the embodiment 1 above, when the keys assigned to the reproducing device 7 are invalidated, five keys, namely Key I, Key C, IK8, Key K, Key L, are then selected as selected keys. When the keys assigned to the reproducing device 12 are further invalidated, six keys, namely Key I, Key C, IK8, Key E, IK11, and Key L are then selected as selected keys. Thus, the numbers of ciphertexts generated in these two cases are 5 and 6, respectively.

It should be noted that the steps S802-S824 in the flowchart shown in FIG. 8 are the operations applicable to the case of one tree structure, so that the key management information regarding L tree structures are updated by repeating the same operations L times.

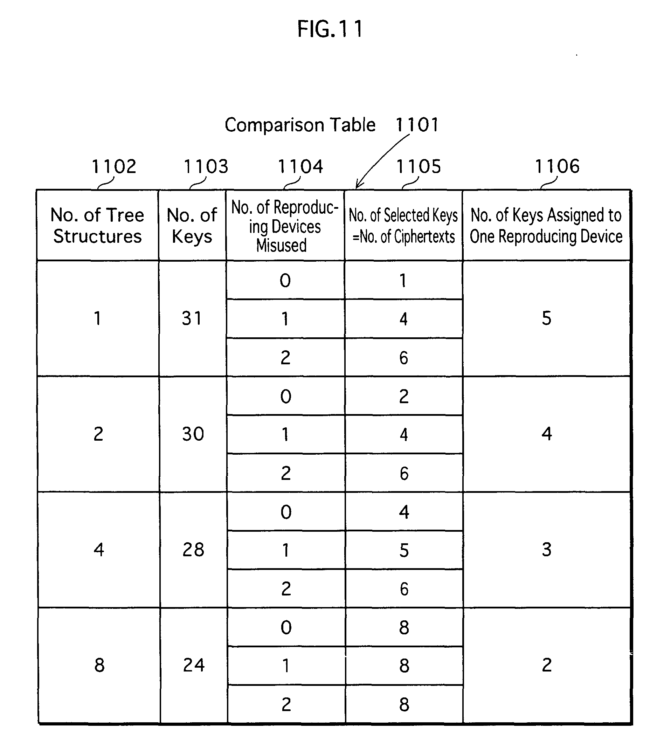

FIG. 11 is a table showing comparisons of the data in the key management information in the cases where there are different numbers of three structures for 16 of the reproducing devices 103.

The comparison table 1101 shows the number of tree structures 1102, the number of keys 1103, the number of misused reproducing devices 1104, the number of selected keys 1105 that is equal to the number of ciphertexts 1105, and the number of keys stored by one reproducing device 1106.

The number of the tree structures 1102 is "one" in the embodiment 1 above, and "four" in this embodiment. As the number of the tree structures 1102 is increased, the number of hierarchal layers in each tress structure decreases, so that the number of the keys 1103 decreases as well. In other words, when the number of tree structures 1102 is increased, the number of keys to be stored in the key management information storage unit 111 decreases. Further, the number of keys stored in the key storage unit 131 of the reproducing device 103 decreases as well.

However, the increase in the number of the tree structures 1102 results in increase in the number of selected keys=the number of ciphertexts 1105 in an initial state. Here, the initial state refers to the state in which the number of misused reproducing devices 1104 is "0". When the number of misused reproducing devices 1104 increases, the number of ciphertexts 1105 increases, but to a different extent depending on the number of the tree structures 1102. For example, when the number of misused reproducing devices 1104 is "2", the number of ciphertexts 1105 is "6" regardless of the number of tree structures 1102 being either "1", "2", or "4".

As clarified in the above comparisons, when the maximum number of keys to be invalidated is set to be 2^{K}, the optimum number of tree structures L is 2^{K+1} in order to minimize the number of ciphertexts 1105, the number of keys 1106 to be stored by a reproducing device, the number of keys 1103 to be stored in the key management information storage unit 111, and the like.

### (Embodiment 3)

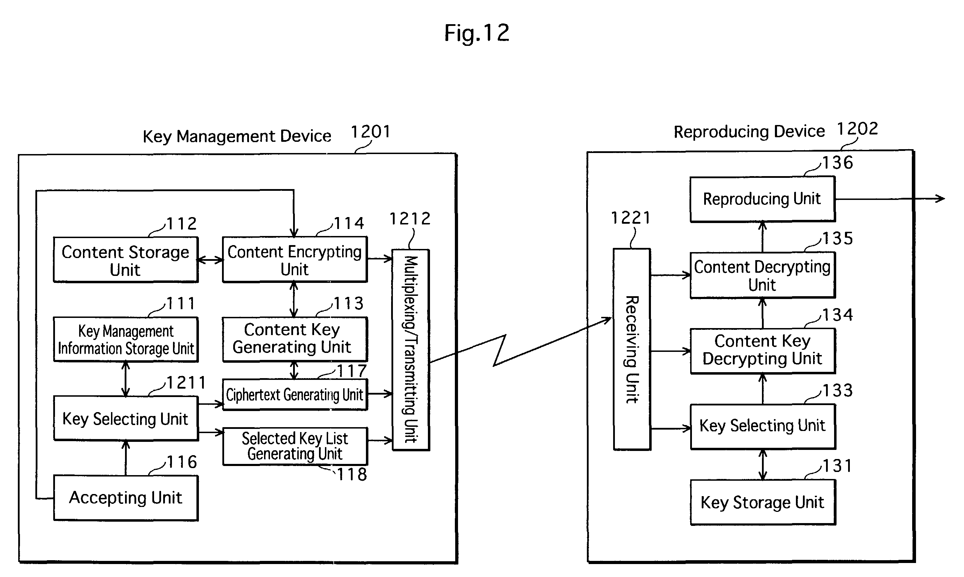

FIG. 12 is a view showing the constructions of a key management device and a reproducing device according to a third embodiment of the present invention.

A key management device 1201 includes the key management information storage unit 111, the content storage unit 112, the content key generating unit 113, the content encrypting unit 114, a key selecting unit 1211, and the accepting unit 116, the cipher text generating unit 117, the selected key list generating unit 118, and a multiplexing/transmitting unit 1212.

Each of reproducing devices 1202 includes a receiving unit 1221, the key storage unit 131, the key selecting unit 133, the content key decrypting unit 134, the content decrypting unit 135, and the reproducing unit 136. It should be noted that the same components as those constituting the key management device 101 and the reproducing device 103 are denoted by the same reference numbers and description thereof is omitted.
Hereinafter, description is given only to the constructions unique to this embodiment.

Instead of the recording unit 119 that the key management device 101 has in the embodiment 1, the key management device 1201 includes the multiplexing/transmitting unit 1212, and acts as a data transmitting device.

Instead of the read unit 132 that the reproducing device 103 has in the embodiment 1, the reproducing device 1202 includes the receiving unit 1221, and acts as a data receiving device.

The content encrypting unit 114 reads a content from the content storage unit 112, and encrypts the content using a content key generated by the content key generating unit 113, and passes the data resulting from the encryption to the multiplexing/transmitting unit 1212.

The ciphertext generating unit 117 encrypts the content key generated by the content key generating unit 113 using key data passed from the key selecting unit 1211 and passes the resulting ciphertexts to the multiplexing/transmitting unit 1212.

The selected key generating unit 118 generates a selected key list with the key IDs passed from the key selecting unit 1211, and passes the thus generated list to the multiplexing/transmitting unit 1212.

The multiplexing/transmitting unit 1212 transmits the data passed from the content encrypting unit 114, the ciphertexts generated by the ciphertext generating unit 117, and the selected key list generated by the selected key list generating unit 118 to a plurality of reproducing units 1202.

At the end of each reproducing unit 1202, the receiving unit 1221 receives the data, the ciphertexts, and the selected key list transmitted from the multiplexing/transmitting unit 1212, and then passes the data, the ciphertexts, the selected key list to the content decrypting unit 135, the content key decrypting unit 134, and the key selecting unit 133, respectively.

Incidentally, communications of the data and the like between the multiplexing/transmitting unit 1212 and the reproducing devices 1212 may be made via broadcast waves, multicast communication paths for the Internet using a public network, CATV, or the like.

Here, each reproducing device 1202 receives data from the key management device 1202 under the subscription contract, so that a group of keys stored in the reproducing device may be invalidated when the contract is canceled. At this time the keys are invalidated in the similar manner to the reproducing devices 103 in the embodiment 1.

Similarly to the embodiment 1 above, the key management information storage unit 111 stores, as key management information, keys each of which is arranged on a node of a tree structure as shown FIG. 2.

Now, description is given to processing to restore a key group that has been invalidated. Here, the group of keys assigned to the reproducing device 12 has been invalidated due to the cancellation of the subscription contract, but the contract is made again, so that the key groups need to be restored.

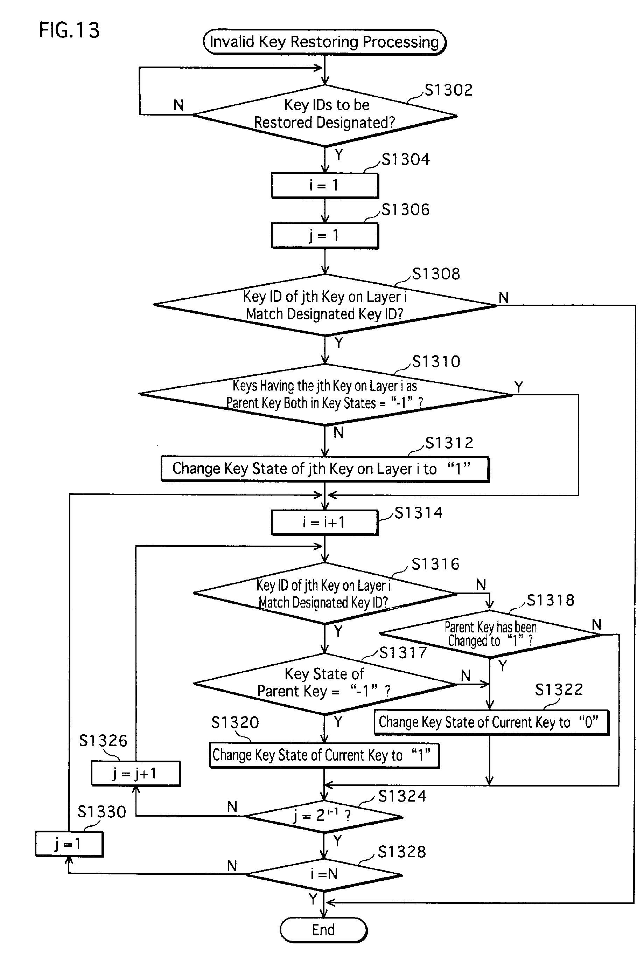

FIG. 13 is a flowchart showing operations to restore the keys that have been invalidated to be usable again.

The accepting unit 116 accepts an operator's input designating key IDs, "Key O, Key N, Key K, Key F and IK12" that are the keys in the key group assigned to the reproducing device 12. The key selecting unit 1211 waits for the receiving unit 116 to pass the inputted IDs "Key O, Key N, Key K, Key F and IK12" (step S1302), sets the counter i at an initial value of "1" (step S1304), and sets the counter j at an initial value of "1" (step S1306).

The key selecting unit 1211 judges whether "Key O", which is the key ID of a first key on the layer 1, matches any of the designated key IDs (step S1308). When the judgment results in negative, the designated keys to be restored do not reside in this tree structure. Thus, key selecting unit 1211 terminates the processing on this tree structure, and goes on to the processing to check the key management information regarding another key structure. In this embodiment, there is only one tree structure, so that the key ID, "Key O" matches one of the designated key IDs to be restored. Next, the key selecting unit 1211 judges whether two keys having the first key on the layer 1 as their common parent key are both in the key state "-1" (step S1310). Here, "Key M" and "Key N" are both in the key state "-1", so that the key selecting unit 1211 goes onto a step 1314. In the case where one of the two keys is not in the key state "-1", to be more specific, in the case where "Key M" is in the key state "1", the key state of the first key on the layer 1 is changed to "1" (step S1312).

Next, the key selecting unit 1211 adds "1" to the counter i (S1314), and judges whether the j^{th} key on the layer i matches any of the designated key IDs to be restored (step 1316). When there is a match, the key selecting unit 1211 judges whether its parent key is in the key state "-1" (step S1317). When there is not a match in the step S1316, the key selecting unit 1211 judges whether the key state of its parent key has been changed to "1" (step S1318). When the key state of the parent key has not been changed, the key selecting unit 1211 goes onto a step S1324. Otherwise, the key selecting unit 1211 changes the key state of the j^{th} key on the layer i to "0" (step S1322) and then goes onto the step S1324.

When it is judged in the step S1317 that the parent key is not in the key state "-1", the key selecting unit 1211 performs the step 1322. Otherwise, the key selecting unit 1211 changes the key state of the j^{th} key on the layer i to "1" (step S1320), and then goes onto the step S1324.

In the step s1324, the key selecting unit 1211 judges whether the counter j holds a value equal to 2ⁱ⁻¹. If the judgment results in negative, the key selecting unit 1211 adds "1" to the counter j (step S1326), and the goes back to the step S1316. If the judgment results in affirmative, the key selecting unit 1211judges whether the counter i holds a value equal to "N" (step S1328). If the judgment results in affirmative, the key selecting unit 1211 terminates the processing. If not, the key selecting unit 1211 initializes the counter i to "1" (step S1330), and then goes back to the step S1314.

As a result of the above processing, the keys in the key group assigned to the reproducing device 12 are restored, so that the key management information is changed to the key management information 401 shown in FIG. 4.

Now, the reproducing device 12 is allowed to decrypt one of the ciphertexts transmitted from the key management device 1201 using the key data stored in the key storage unit 131, thereby obtaining the content key. Consequently, the reproducing device 12 is capable of decrypting the encrypted data using the content key as a decryption key.

Next, description is given to processing to additionally store new key groups to be assigned to the reproducing devices 1202.

To add four reproducing devices when the existing keys are in condition shown in the key management information 401, the key selecting unit 1211 newly generates keys arranged in a tree structure having three layers.

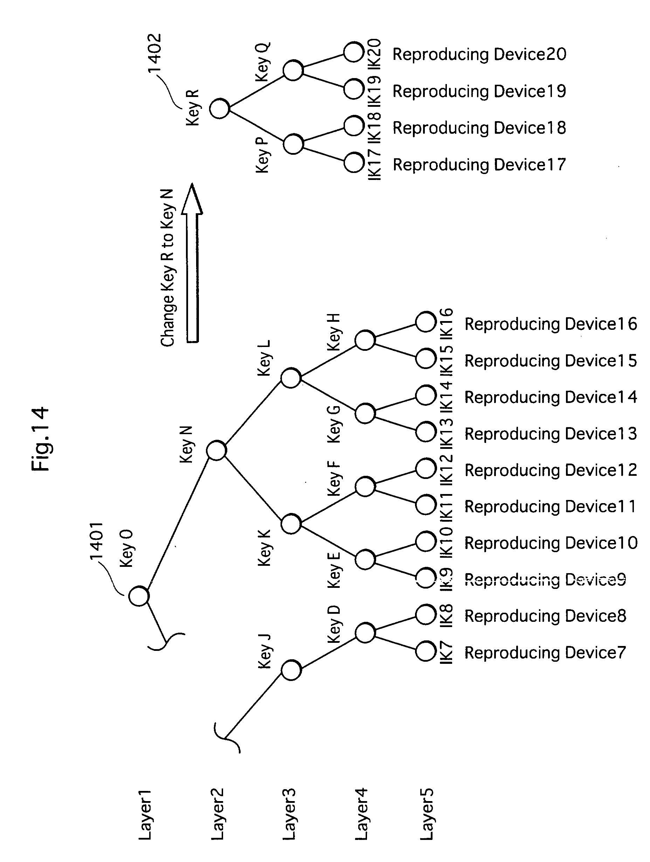

FIG. 14 is a schematic view showing the key arrangement at this stage. A new tree structure 1402 is composed of four individual keys to be assigned to each of the additional reproducing devices 17, 18, 19, and 20, and two keys, Key P and Key Q residing on the upper layer 2, and one key, Key R residing on the top layer 1.

Next, the key selecting unit 1211 replaces Key R on the layer 1 with Key N on the layer 2 of the existing tree structure (the key sate of Key N is not "-1").

As a result, the following key groups are assigned to the reproducing devices 17, 18, 19, and 20, which are:
the reproducing device 17 (Key O, Key N, Key P and IK17);
the reproducing device 18 (Key O, Key N, Key P and IK18);
the reproducing device 19 (Key O, Key N, Key Q and IK19); and
the reproducing device 17 (Key O, Key N, Key Q and IK20).

The key selecting unit 1211 adds to the key management information 401 a key ID, key data, a parent key ID, and a key state of each newly added key. Here, each key state is "0" indicating the key is non-used key.

In the above description, the Key R residing on the top layer of the new tree structure 1402 is replaced with Key N residing in the existing tree structure 1402. Yet, it is also applicable to replace the Key R with the Key L.

### (Embodiment 4)

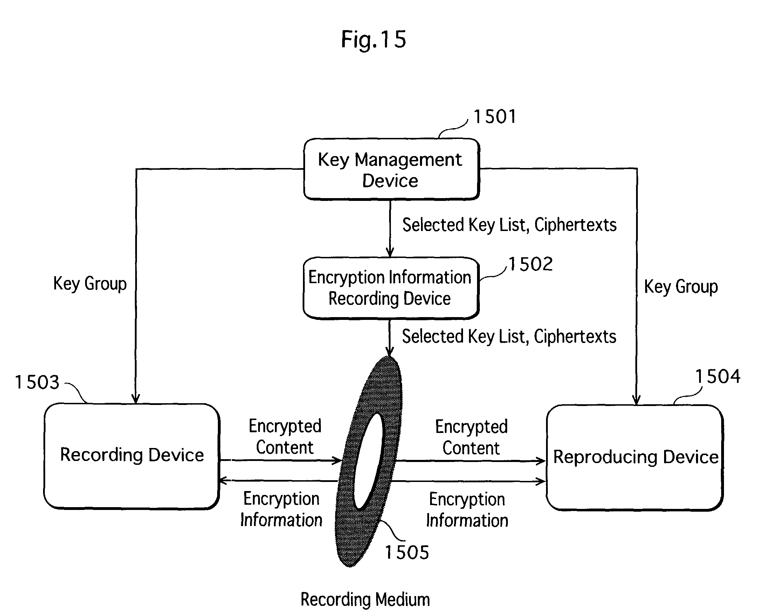

FIG. 15 is a schematic view showing the construction of a system that is constructed of a key management device and an encryption information storage unit, recording units, and reproducing units according to an embodiment 4 of the present invention.

To be more specific, this system is constructed of a key management device 1501, an encryption information recording unit 1502, a plurality of recoding units 1503, and a plurality of reproducing units 1504. A rewritable recording medium 1502 has encryption information that is pre-recorded by the encryption information recording device 1502.

The keymanagement device 1501 has the similar construction to that of the key management device 101 of the embodiment 1 above, except that the content storage unit 112, the content encrypting unit 114, and the recording unit 119 are not included. The encryption information recording unit 1502 has the construction similar to part of the recording unit 119 of the key management device 101.

The recording medium 1505 is a large capacity recording. medium, such as a DVD-RAM, DVD-RW, and the like, and has a selected key list and ciphertexts that are written by the encryption information recording device at the time of manufacturing the recording medium.

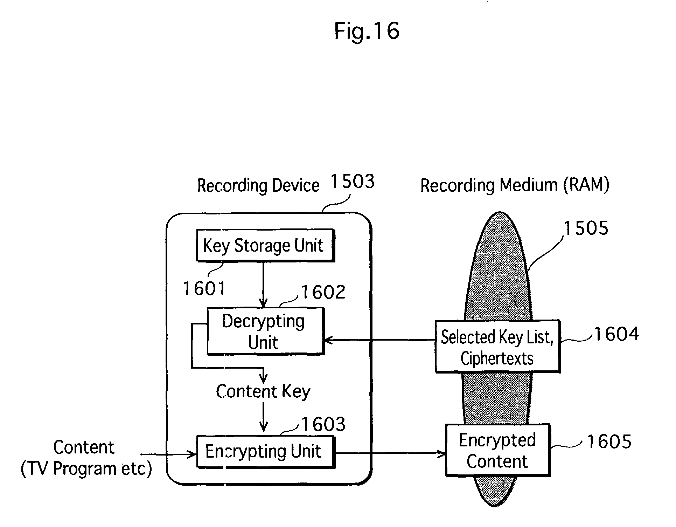

Each of the recording devices 1503 includes, as shown in FIG. 16, a key storage unit 1601, a content key decrypting unit 1602, and an encrypting unit 1603.

Similarly to the key storage unit 131 included in the reproducing device 103 of the embodiment 1 above, the key recording unit 1601 stores N keys assigned in advance.

When the recording medium 1505 is attached to the recording device 1503, the content key decrypting unit 1602 reads the selected key list and the ciphertexts from the recording medium 1505. Then, the content key decrypting unit 1602 reads from the key storage unit 1601 a key that correspond to any of the key IDs in the selected key list, and decrypts one of the ciphertexts that is decryptable with the thus decrypted key data, thereby obtaining a content key. Finally, the content key decrypting unit 1602 passes the thus obtained content key to the encrypting unit 1603.

The encrypting unit 1603 receives a content such as a TV program, encrypts the content with the content key passed from the content key decrypting unit 1602, and writes the thus encrypted content to the recording medium 1505.

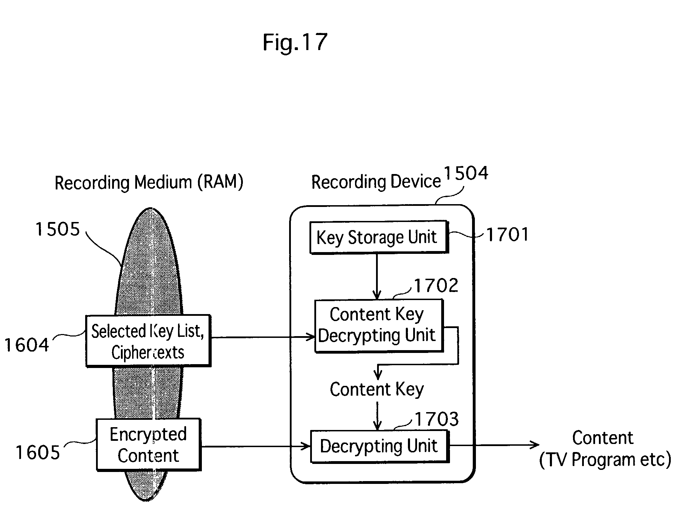

The reproducing device 1504 has the construction similar to the reproducing device 103 of the embodiment 1 above. FIG. 17 shows the construction thereof in a simplified manner.

When the recording medium 1505 is attached to the reproducing device 1504, the content key decrypting unit 1702 reads the selected key list and the ciphertexts from the recording medium 1505, and reads from the key storage unit 1701 the key data that corresponds to any of the keys included in the selected key list. The content key decrypting unit 1702 decrypts one of the ciphertexts that corresponds to the read key data, thereby obtaining the content key. The content key decrypting unit 1702 passes the thus obtained content key to the decrypting unit 1703.

The decrypting unit 1703 reads the encrypted content from the recording medium to decrypt the content using the content key passed from the content key decrypting unit 1703, then reproduces and outputs the decrypted content.

Although, it is described in the embodiments 1 and 2 above that the read-only recording medium 102 is used to record the encrypted data together with the encryption information, in this embodiment, however, ciphertexts that are generated by encrypting a content key and encryption information are pre-recorded to the rewriteable recording medium 1505. Both the recording device 1503 and the reproducing device 1504 decrypt one of the ciphertexts using a key stored in each device to obtain the content key. Then, the recording device 1503 encrypts a content using the content key, while the reproducing device 1504 decrypts the content using the content key.

In this manner, the system of this embodiment manages key groups assigned to both the recording device 1503 and the reproducing device 1504.

It should be noted that in the above embodiments, the key management devices and the reproducing devices have the constructions shown in FIG. 1 or FIG. 12. Yet, the present invention may be embodied in a program implementing functions of each component by a computer. Further, such a program may be recorded on a computer-readable medium and used to implement factions of the key management device and/or the reproducing device.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A key management device for managing keys, the keys being grouped into a plurality of key groups each of which is assigned to one of a plurality of reproducing devices for decrypting encrypted data to reproduce the data, the key management device comprising:
key storage means for storing the keys, wherein
each key is associated with a node forming at least one *N*-layer tree structure (*N* is 2 or a natural number greater than 2), and
each key group includes keys associated with a different group of nodes, each group of nodes being a set of nodes located on a different path, in each tree structure, connecting a different node on the *N*^{th} layer and a node on the highest layer; and
encryption information generating means for, upon receipt of information designating a key group assigned to one of the reproducing devices,
(1) invalidating each key in the designated key group,
(2) selecting non-invalid keys being immediately subordinate to each invalid key from among keys in the key groups that are assigned to the other reproducing devices and each of which includes one or more invalid keys, and
(3) generating encryption information that includes (i) ciphertexts corresponding to a content key that is used to encrypt the data, the ciphertexts being generated by encrypting the content key using each selected key, and (ii) identification information for identifying the selected keys, and wherein
each reproducing device stores N keys assigned thereto, selectively decrypts one of the ciphertexts that is decryptable using a key identified by the identification information to obtain the content key, and decrypts the data using the thus obtained content key to reproduce a content.

2. The key management device of Claim 1, wherein
the encryption information generating means includes:
a data generating unit which generates the data by encrypting the content using the content key;
an invalid key accepting unit which accepts the information designating the key group assigned to the one reproducing device;
a key selecting unit which invalidates each key in the designated key group, and selects the non-invalid keys being immediately subordinate on a different path to each invalid key except for the invalid key residing on the *N*^{th} layer;
a ciphertext generating unit which generates the ciphertexts by encrypting the content key using each selected key; and
a selected key list generating unit which generates a list used to identify the selected keys.

3. The key management device of Claim 2, wherein
the key storage means includes a key management information storage unit which stores each key's (i) identifier for identifying the key, (ii) parent key identifier for identifying its parent key being immediately superordinate to the key, (iii) key state information showing whether the key is a selected key being used to generate one of the ciphertexts, an invalid key, or a non-used key, and (iv) key data, and
the invalid key accepting unit accepts identifiers for each key in the designated key group, and
the key selecting unit
(1) updates the key state information so as to invalidate a key of which identifier matches any of the designated identifiers, and
(2) updates the key state information so as to select a key (i) of which identifier does not match any of the designated identifiers, (ii) of which parent key is invalidated, and (iii) that is neither invalided nor selected.

4. The key management device of Claim 3, wherein
in the key management information, the key on the highest layer has a specific value as its parent key identifier, and
the key selecting unit selects the key of which parent identifier has the specific value as a selected key unless the key is invalidated.

5. The key management device of Claim 2, wherein the encryption information generating means further includes:
a restoring key accepting unit which accepts information designating a key group that has been invalidated and to be restored; and
a restoring unit which
(a) selects, from among the keys in the designated key group to be restored, a key of which parent key being immediately superordinate to the key and a brother key having the same parent key are both invalidated, and
(b) changes a subordinate key of the thus selected key in the designated key group to a non-used key.

6. The key managing device of Claim 5, wherein
the key storage means includes a key management information storage unit which stores, each key's (i) identifier for identifying the key, (ii) parent key identifier for identifying its parent key being immediately superordinate to the key, (iii) key state information showing whether the key is a selected key being used to generate one of the ciphertexts, an invalid key, or a non-used key, and (iv) key data,
the restoring key accepting unit accepts identifiers for each key in the designated key group to be restored, and
the restoring unit updates the key state information so as to
(1) select, from among keys having an identifier that matches any of the designated identifiers, (i) the key on the highest layer when its immediately subordinate key residing on a different path is currently selected, or (ii) a key on the second layer or below when its brother key having the same parent key is all invalidated,
(2) change to a non-used key a key having an identifier that matches any of the designated identifiers and being subordinate on the same path to the thus selected key, and
(3) change to a non-used key a key having an identifier that does not match any of the designated identifiers and having the thus selected key as its parent key.

7. The key management device of Claim 2, further comprising:
new key accepting means for accepting the number of reproducing devices to which a key group is newly assigned;
new key generating means for generating keys which are associated with nodes forming an M-layer tree structure (M is a natural number between 2 and N inclusive); and
connecting means for replacing a key on the highest layer of the newly generated tree structure with a selected key or a non-used key residing on the (*N-M*+1)^{th} or higher layer of the existing tree structure stored in the key recording means.

8. The key management device of Claim 2, further comprising recording means for recording to a recording medium the data generated by the data generating unit, the ciphertexts generated by the ciphertext generating unit, and the selected key list generated by the selected key generating unit.

9. The key management device of Claim 2, further comprising transmitting means for transmitting to the plurality of reproducing devices the data generated by the data generating unit, the ciphertexts generated by the ciphertext generating unit, and the selected key list generated by the selected key generating unit.

10. The key management device of Claim 3, wherein
the key management information storing unit stores the key management information every time it is updated by the key selecting unit, and
the key storage means further includes a restoring unit for restoring the key management information back to its initial version or any updated version.

11. The key management device of Claim 1, wherein
the key storage means stores *L* tree structures, *L* being 2^{*K*}⁺¹ when the maximum number of key groups to be invalidated is set at 2^{*K*}.

12. A recording medium to be reproduced by one of a plurality of reproducing devices each of which stores a key group, wherein
each key in the key group being assigned to a node forming an *N*-layer tree structure (*N* is 2 or a natural number greater than 2) together with nodes with which keys stored in the other reproducing devices are associated, and
the keys in the key group being associated with a group of nodes that is a set of nodes located on a path, in each tree structure, connecting a node on the *N*^{th} layer and a node on the highest layer,
the recording medium comprising:
a data area which stores data generated by encrypting a content using a content key;
a ciphertext area which stores at least one ciphertext generated by encrypting the content key using a selected key, the selected key being identical to one of the keys stored in each reproducing device except for a specifically designated reproducing device; and
a selected key list area which stores information identifying the selected key used for encrypting the content key.

13. A reproducing device for decrypting encrypted data to reproduce the data, the reproducing device comprising:
key group storing means for storing *N* keys (*N* is 2 or a natural number greater than 2), wherein
the *N* keys are respectively associated with nodes forming an *N*-layer tree structure together with nodes with which keys stored in other reproducing devices are associated, and
the *N* keys are associated with a group of nodes that is a set of nodes located on a path, in the tree structure, connecting a node on the *N*^{th} layer to a node on the highest layer;
reproduction information obtaining means for obtaining (i) the data by encrypting a content using a content key, (ii) at least one ciphertext generated by encrypting the content key, and (iii) identification information for identifying a key used to encrypt the content key;
content key decrypting means for selecting a key identified by the identification information from the keys stored in the key group storage means, and decrypting the ciphertext that is decryptable using the thus selected key to obtain the content key; and
content reproducing means for decrypting the data using the thus obtained content key to reproduce the content.

14. The reproducing device of Claim 13, further comprising read means for reading from a recording medium (i) the data generated by encrypting the content using the content key, (ii) the ciphertext generated by encrypting the content key, and (iii) the information for identifying the key used to decrypt the content key, and passing the read result to the reproduction information obtaining means.

15. The reproducing device of Claim 13, further comprising receiving means for receiving (i) the data generated by encrypting the content using the content key, (ii) the ciphertext generated by encrypting the content key, and (iii) the information for identifying the key used to decrypt the content key, and passing the received result to the reproduction information obtaining means.

16. A key management method for use in a key management device to manage keys stored in a storage area of the key management device, wherein
the keys are grouped into a plurality of key groups each of which is assigned to one of a plurality of reproducing devices,
each key is associated with a node forming at least one *N*-layer tree structure (*N* is 2 or a natural number greater than 2),
each key group includes keys associated with a different group of nodes, each group of nodes being a set of nodes located on a different path, in each tree structure, connecting a different node on the *N*^{th} layer and a node on the highest layer, the key management method comprising:
an accepting step for accepting information designating a key group stored in one of the reproducing devices;
a key selecting step for
(1) invalidating each key in the designated key group, and
(2) selecting non-invalid keys being immediately subordinate to each invalid key from among keys in the key groups that are assigned to the other reproducing devices and each of which includes one or more invalid keys; and
an encryption information generating step for generating encryption information that includes (i) ciphertexts corresponding to a content key that is used to encrypt the data, the ciphertexts being generated by encrypting the content key using each selected key, and (ii) identification information for identifying the selected keys, and wherein
each reproducing device stores *N* keys assigned thereto, selectively decrypts one of the ciphertexts that is decryptable using a key identified by the identification information to obtain the content key, and decrypts the data using the thus obtained content key to reproduce a content.

17. A key management program for use in a computer to manage keys, the keys being grouped into a plurality of key groups each of which is assigned to one of a plurality of reproducing devices, wherein
each key is associated with a node forming at least one *N*-layer tree structure (*N* is 2 or a natural number greater than 2),
each key group includes keys associated with a different group of nodes, each group of nodes being a set of nodes located on a different path, in each tree structure, connecting a different node on the *N*^{th} layer and a node on the highest layer, the program comprising:
an accepting step for accepting information designating a key group stored in one of the reproducing devices;
a key selecting step for
(1) invalidating each key in the designated key group, and
(2) selecting non-invalid keys being immediately subordinate to each invalid key from among keys in the key groups that are assigned to the other reproducing devices and each of which includes one or more invalid keys; and
an encryption information generating step for generating encryption information that includes (i) ciphertexts corresponding to a content key that is used to encrypt the data, the ciphertexts being generated by encrypting the content key using each selected key, and (ii) identification information for identifying the selected keys, and wherein
each reproducing device stores *N* keys assigned thereto, selectively decrypts one of the ciphertexts that is decryptable using a key identified by the identification information to obtain the content key, and decrypts the data using the thus obtained content key to reproduce a content.

18. A computer readable recording medium for use in a key management device to manage keys, the keys being grouped into a plurality of key groups each of which is assigned to one of a plurality of reproducing devices, wherein
each key is associated with a node forming at least one *N*-layer tree structure (*N* is 2 or a natural number greater than 2),
each key group includes keys associated with a different group of nodes, each group of nodes being a set of nodes located on a different path, in each tree structure, connecting a different node on the *N*^{th} layer and a node on the highest layer, the recording medium comprising:
an accepting step for accepting information designating a key group stored in one of the reproducing devices;
a key selecting step for
(1) invalidating each key in the designated key group, and
(2) selecting non-invalid keys being immediately subordinate to each invalid key from among keys in the key groups that are assigned to the other reproducing devices and each of which includes one or more invalid keys; and
an encryption information generating step for generating encryption information that includes (i) ciphertexts corresponding to a content key that is used to encrypt the data, the ciphertexts being generated by encrypting the content key using each selected key, and (ii) identification information for identifying the selected keys, and wherein
each reproducing device stores *N* keys assigned thereto, selectively decrypts one of the ciphertexts that is decryptable using a key identified by the identification information to obtain the content key, and decrypts the data using the thus obtained content key to reproduce a content.

19. A system comprising:
a plurality of recording devices for recording encrypted data to a rewritable recording medium;
a plurality of reproducing devices for decrypting and reproducing the encrypted data being recoded in the recording medium; and
a key management device for managing keys, the keys being grouped into a plurality of key groups each of which is assigned to the plurality of recording devices and the plurality of reproducing devices, wherein
the key management device includes:
key storage means for storing the keys, wherein
each key is associated with a node forming at least one *N*-layer tree structure (*N* is 2 or a natural number greater than 2), and
each key group includes keys associated with a different group of nodes, each group of nodes being a set of nodes located on a different path, in each tree structure, connecting a different node on the *N*^{th} layer and a node on the highest layer;
encryption information generating means for, upon receipt of information designating a key group assigned to one of the recording devices and/or one of the reproducing devices,
(1) invalidating each key in the designated key group,
(2) selecting non-invalid keys being immediately subordinate to each invalid key from among keys in the key groups that are assigned to the other recording devices and/or the other reproducing devices and each of which includes one or more invalid keys, and
(3) generating encryption information that includes (i) at least one ciphertext corresponding to a content key that is used to encrypt the data, the ciphertexts being generated by encrypting the content key using each selected key, and (ii) identification information for identifying the selected keys; and
encryption information recording means for recording the thus generated encryption information to the recording medium,
each recording device includes:
key group storing means for storing *N* keys, the *N* keys being associated with nodes located on a path, in each tree structure, connecting a node on the *N*^{th} layer to a node on the highest layer;
content key decrypting means for reading the encryption information from the recording medium, identifying a key stored in the key group storing means using the identification information, and decrypting the ciphertext being decryptable with the thus identified key to obtain the content key; and
content encrypting means for encrypting a content using the thus obtained content key, and record the resulting encrypted data to the recording medium, and
each reproducing device includes:
key group storing means for storing *N* keys, the *N* keys being associated with nodes located on a path, in the tree structure, connecting a node on the *N*^{th} layer to a node on the highest layer;
reproduction information obtaining means for obtaining the data generated by encrypting the content using the content key, the ciphertext generated by encrypting the content key, and the identification information for identifying the key used to encrypt the content key;
content key decrypting means for selecting a key identified by the identification information from the keys stored in the key group storage means, and decrypting the ciphertext decryptable using the thus selected key to obtain the content key; and
content reproducing means for decrypting the data using the thus obtained content key to reproduce the content.

20. A rewritable recording medium having data generated by encrypting a content using a content key, the data being recorded by a recording device storing one of key groups, and read/reproduced by a reproducing device storing one of the key groups, wherein
the key groups together include keys each of which is associated with a node forming an *N*-layer tree structure (*N* is 2 or a natural number greater than 2),
each key group includes keys associated with a different group of nodes, each group of nodes that is a set of nodes located on a different path, in the tree structure, connecting a different node on the *N*^{th} layer and a node on the highest layer, the recording medium comprising:
a ciphertext area for storing at least one ciphertext generated by encrypting the content key using a selected key, the selected key being identical to a key stored in the recoding device and a key stored in the reproducing device;
a selected key area for storing identification information identifying the selected key used for encrypting the content key; and
a data area for storing data recorded by the recording device, the data being decryptable using the content key, the content key is obtained by decrypting the ciphertext using the key that is stored in the reproducing device and selected according to the identification information.

21. A key management device for managing keys, the keys being grouped into a plurality of key groups each of which is assigned to one of a plurality of recording devices for recording encrypted data in a rewritable recording medium, and to one of a plurality of reproducing devices for decrypting the encrypted data recorded in the recording medium to reproduce the data, the key management device comprising:
key storing means key storage means for storing the keys, wherein
each key is associated with a node forming at least one *N*-layer tree structure (*N* is 2 or a natural number greater than 2), and
each key group includes keys associated with a different group of nodes, each group of nodes being a set of nodes located on a different path, in each tree structure, connecting a different node on the *N*^{th} layer and a node on the highest layer;
encryption information generating means for, upon receipt of information designating a key group assigned to one of the reproducing devices,
(1) invalidating each key in the designated key group,
(2) selecting non-invalid keys being immediately subordinate to each invalid key from among keys in the key groups that are assigned to the other reproducing devices and each of which includes one or more invalid keys, and
(3) generating encryption information that includes (i) ciphertexts corresponding to a content key that is used to encrypt the data, the ciphertexts being generated by encrypting the content key using each selected key, and (ii) identification information for identifying the selected keys; and
encryption information recording means for recording the thus generated encryption information in the recording medium.

22. A recording device for recording encrypted data in a rewritable recording medium, the recording device comprising:
key group storing means for storing *N* keys (*N* is 2 or a natural number greater than 2), wherein
the *N* keys are respectively associated with nodes forming an *N*-layer tree structure together with nodes with which keys stored in other recording devices are associated, and
the *N* keys are associated with a group of nodes that is a set of nodes located on a path, in the tree structure, connecting a node on the *N*^{th} layer to a node on the highest layer;
content key decrypting means for reading the encryption information from the recording medium, selecting a key stored in the key group storing means using identification information, and decrypting a ciphertext being decryptable with the thus selected key to obtain the content key, wherein
the recording medium pre-stores encryption information including at least the ciphertext encrypted using the selected key and the identification information for identifying the selected key; and
content encrypting means for encrypting a content using the thus obtained content key, and record the resulting encrypted data to the recording medium.
